# EUROPEAN PATENT APPLICATION

(11) **EP 1 589 730 A1**
(43) Date of publication of application: **26.10.2005**
(21) Application number: 05003928.8
(22) Date of filing: 23.02.2005
(51) Int. Cl.: H04M 1/2745, H04M 1/725

(54) **Method for management of Vcards**

(30) Priority: 19.04.2004 KR 2004026628
(71) Applicant: SAMSUNG ELECTRONICS CO., LTD., Suwon-si, Gyeonggi-do 442-742 (KR)
(72) Inventor: Yu, Hyung-Seok Samsung Electronics Co. LTD, Suwon-si, Gyeonggi-do (KR)
(74) Representative: Grünecker, Kinkeldey, Stockmair & Schwanhäusser Anwaltssozietät

(57) **Abstract**

Disclosed is a method for creating vCards on a mobile terminal using a user's own design and for easily exchanging the vCards between mobile terminals and other electronic devices. A vCard displayed on a mobile terminal is stored as image data in a JPEG file by inserting vCard data (100) in MIME type into the JPEG header (120) of image data corresponding to the vCard as displayed on the mobile terminal and by including an identification code (110) at the beginning of the vCard data. Since the mobile terminal sends an image file generated by the combination of the user information in the vCard with corresponding image data in a predetermined format, it has an improved vCard compatibility with other devices. Moreover, users can create graphics intensive vCards that satisfy their demand for distinctiveness. A recipient's mobile terminal that receives a graphics intensive vCard can store the same vCard as displayed in a JPEG image file or (to conserve valuable resources) store the user information extracted from the vCard, for example, by updating an existing vCard database. Accordingly, vCard compatibility is improved between mobile terminals and other devices (for example, desktop and notebook PCs).

## Description

The present invention relates to a vCard or an electronic business card, and more particularly to a method for managing a vCard sent or received between mobile communication terminals to enable a user to store or easily locate the vCard when needed.

Typical paper or plastic business cards used for personal data interchange carry some basic information, such as company names, titles, phone numbers, fax numbers and email addresses. Personal data interchange occurs every time two or more individuals communicate in either a business or personal context. Business cards are useful as a means for maintaining business relationships.

People are known to collect business cards in card holders. Alternatively, they briefly write down important data, such as the names and phone numbers of individuals which may be listed on business cards. When information contained in a business card is changed, new business cards must be printed and distributed to inform others of the change.

With the development of telecommunication technologies, vCards (virtual business cards or electronic business cards) that automate the exchange of personal information using mobile terminals, personal computers or other electronic means have been suggested to eliminate the inconvenience and inefficiencies of conventional business cards.

VCards can be used to forward personal data over the Internet. VCards use small text files which include company names, addresses, phone numbers, email addresses and other contact information which is inputted electronically by users. Moreover, vCards can be sent or received along with email messages. Furthermore, VCards can also include graphics and multimedia files (e.g., photographs or company logos.)

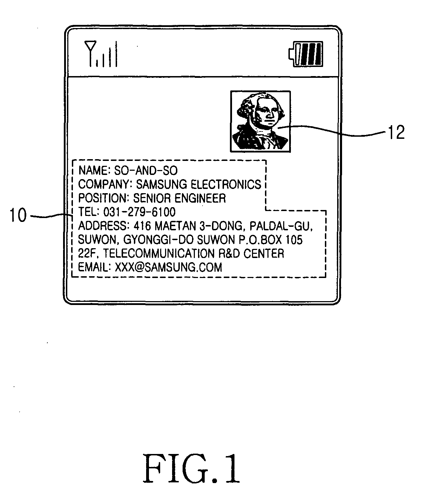

Hereinafter, an example vCard will be explained with reference to FIG. 1. The vCard as shown in FIG. 1 includes a simple image 10 and user information. The vCard has a structured block of data that includes an image portion for inserting a picture or a photograph and a text portion for inserting the user information, such as user's name, company name and phone number.

The vCard is encoded so that it is compatible with an Internet standard, vCard MIME (multi-purpose internet mail extension) content-type, and then sent to desired recipients. MIME is an email transfer protocol that defines a method of sending multimedia data, such as text, voice and image data, via Internet email. When a sender encodes multimedia data into a predefined file type and sends the encoded data, a recipient can read the data by decoding it according to the predefined file type.

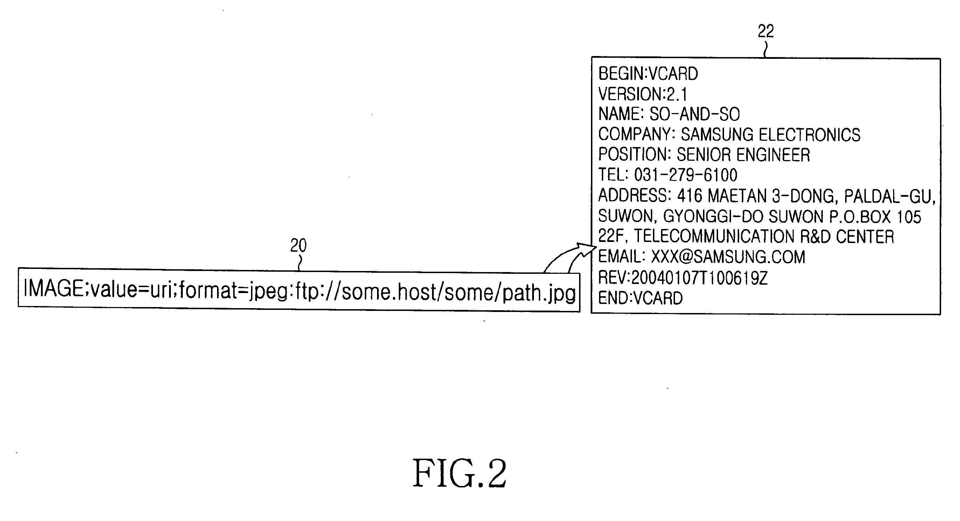

In other words, the vCard MIME content-type is a format for encoding a file to be sent by the sender and to be recognized as a vCard by the recipient. The user data 10 and image 12 illustrated in FIG. 1 can be encoded into the MIME type as shown in FIG. 2, wherein, a conventional encoding process separately specifies an image insert tag 20 in the MIME type 22 to include both user data and an image in a vCard file. More specifically, an image can be included in the MIME type 22 using the image insert tag 20 in a format of "image;value=uri;format=jpeg:ftp://some.host/som/path.jpg" as shown. The vCard created by the encoding process can be sent via MMS (Multimedia Message Service).

Existing vCard technologies focus on the vCards compatibility with mobile terminals or computers and also focus on easy ways to create vCards. Recently, however, vCards have become fashionable to suit diverse personal tastes and individuality. Most vCard users prefer to send and receive unique and distinctive vCards. Also, newly-launched mobile communication devices, mobile terminals and the like with built-in cameras enable users to directly edit images. Such mobile terminals can store a variety of image files through data transmission to and from peripheral devices, such as computers. With the increasing penetration of mobile terminals, transmission of image data via MMS has become commonplace. In other words, users prefer to use graphics-based messaging services that enable transmission of various image data. Due to the increased compatibility with other devices in data transmission, mobile terminals are used to send MMS messages using an Internet standard protocol.

To meet the current trends and improve the usefulness of electronic business cards using various images, a new method for creating vCards is demanded.

As explained above, the vCard MIME type which is an Internet standard protocol, is used in the prior art to make mobile terminals compatible with vCards. However, terminals with small memories have a limited capacity and thus are limited in their ability to insert an image into a text-based vCard using an image insert tag. Accordingly, this limitation makes it difficult to create and send a graphics-based vCard that has a graphical element.

Further, a vCard in MIME type can be opened only by mobile terminals which support the MIME data type. In other words, a recipient can open a vCard file only if the mobile terminal which is being used has a MIME decoder and a decoder for interpreting an image included in the vCard information.

In order to send a vCard via MMS, it is additionally required to separately send vCard data to use the MMS service.

Accordingly, the present invention has been made to solve the above-mentioned problems occurring in the prior art.

It is the object of the present invention to provide a method for managing vCards (virtual business cards or electronic business cards) to improve the vCard compatibility of mobile terminals and other devices, such as PCs, and enable a recipient to recognize vCard files without any additional process.

This object is solved by the subject matter of the independent claims.

Preferred embodiments are defined in the dependent claims.

An aspect of the present invention is to provide a method for creating vCards with images inserted and edited by a user to show diverse personal tastes and individuality.

In order to accomplish the above object and aspects of the present invention, there is provided a method for managing vCards, including the steps of: creating a vCard by inputting user information and an image on a sender's mobile terminal and storing the created vCard in a JPEG (Joint Photographic Experts Group) vCard file; sending the vCard file to a desired recipient's mobile terminal from the sender's mobile terminal; analyzing the vCard file received from the sender's mobile terminal; and decoding and storing the vCard file in the recipient's mobile terminal according to the results of the analysis.

The above features and advantages of the present invention will be more apparent from the following detailed description taken in conjunction with the accompanying drawings, in which:
FIG. 1 shows an example vCard displayed on a mobile terminal according to the prior art;
FIG. 2 shows the vCard in FIG. 1 as matched to a MIME type;
FIG. 3 is a block diagram illustrating the structure of a mobile terminal according to the present invention;
FIG. 4 shows a graphics intensive vCard displayed on a mobile terminal according to the present invention;
FIG. 5A shows the structure of a vCard file sent according to the present invention;
FIG. 5B illustrates the ASCII code corresponding to the vCard file which is shown in FIG. 5A; and
FIG. 6 is a flow chart showing a process of managing a received vCard according to the present invention.

Hereinafter, a preferred embodiment of the present invention will be described with reference to the accompanying drawings. Also, in the following description of the present invention, a detailed description of known functions and configurations incorporated herein will be omitted when it may make the subject matter of the present invention unclear.

The present invention provides a mobile terminal with a function that enables users to create vCards of their own design and then be able to easily exchange the vCards. According to the present invention, a vCard displayed on the mobile terminal is stored as image data in a JPEG file. Since the mobile terminal sends an image file generated by the combination of the user information in the vCard with corresponding image data in a predetermined format, it has an improved vCard compatibility with other devices. Also, users can create graphics intensive vCards that satisfy their demand for distinctiveness.

A recipient's mobile terminal that receives a graphics intensive vCard can store the vCard as displayed in a JPEG image file or can store only the user information which is extracted from the vCard, for example, by updating an existing vCard database.

Also, a vCard table having information fields which are contained in a vCard(e.g., such as a sender's name, phone number, email address and company name), is also used to store a vCard which is sent to or received from any other mobile terminal, in the vCard database. To easily exchange vCards through mobile communications and store the vCards in mobile terminals, it is necessary to standardize the fields of vCard database for storing vCard tables through discussion between mobile service providers or to convert vCards to meet a standard protocol.

When a user creates a vCard by arranging user information and desired images to show his or her own individuality, the vCard displayed on the user's mobile terminal is generated as image data. The image data can be sent along with a vCard table showing the user information. The user information which is input into the information fields of the vCard table includes personal and business information such as company name, title, position, address, phone number, fax number and email address.

Although a method for inserting user information or an image, such as a picture, in a vCard is not described herein, it is obvious that any text or image can be inserted into a vCard using a variety of currently available editing programs. Accordingly, a detailed explanation of a vCard editing method will be omitted.

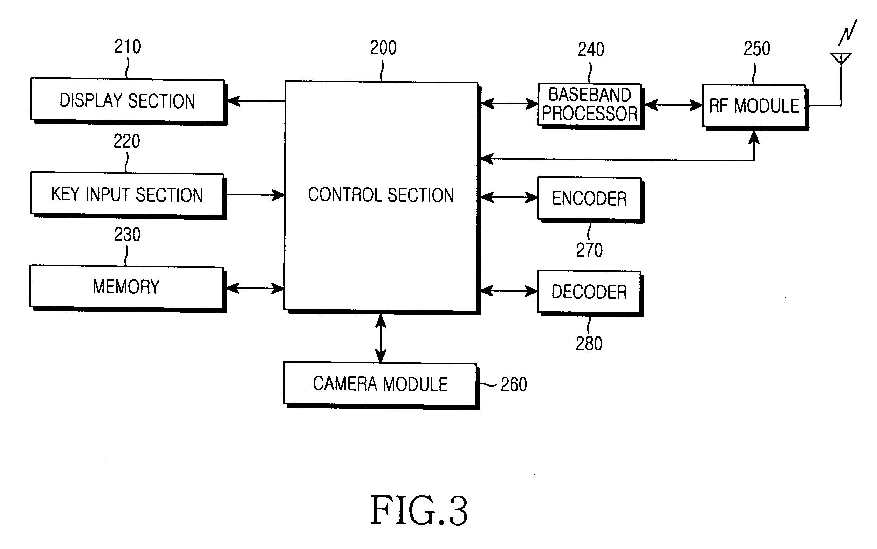

FIG. 3 is a block diagram showing the structure of a mobile terminal according to the present invention. A control section 200 controls the overall operation of the mobile terminal. In the present invention, the control section 200 performs functions of creating and sending and/or receiving vCards, in addition to the control of general communication functions.

When a user selects a vCard editing mode according to the present invention, the control section 200 displays items included in a vCard, such as picture, background and user information, on a display section 210 to enable the user to edit each item and easily create a vCard. When any data is inputted during the vCard editing mode, the control section 200 updates the vCard database to store the inputted vCard data.

The display section 210 displays data inputted through a key input section 220 under the control of the control section 200. It also displays the operational state and other information of the mobile terminal using icons and/or other characters. The display section 210 visibly shows whether a function is selected or implemented. In the present invention, the display section 210 displays detailed items which are necessary for forming a vCard. These items include user information, such as user's (or sender's) name, company name, phone number, and an image. When a vCard is being sent or received, the display section 210 displays a picture showing the vCard sending or receiving state under the control of the control section 200.

The key input section 220 is provided with a plurality of number keys and function keys for implementing various functions. The key input section 220 applies any key inputted data to the control section 200. In other words, the key input section 220 outputs data corresponding to a key pressed by the user and applies the outputted data to the control section 200. The control section 200 detects the data and performs a required function according to the detected data.

A memory 230 which is connected to the control section 200, includes a ROM (Read Only Memory), a RAM (Random Access Memory) and a voice memory for storing a plurality of programs and data necessary to control the operation of the mobile terminal. The memory 230 also stores data which is input to create a vCard, a vCard table of a received vCard, and a program for sending a vCard under the control of the control section 200. The memory 230 has a vCard database for storing vCard tables. A standardized structure of fields is established in the vCard database to store vCard tables which make vCards commonly recognizable in all communication networks. For example, a vCard table includes user information as shown in FIG. 1. The vCard table as matched to the MIME type 22 which is the portion other than the insert image tag 20 which shown in FIG. 2.

An RF module 250 sends and receives RF signals to and from a base station through an antenna 255. The RF module 250 converts a received RF signal into an IF (intermediate frequency) signal and outputs the IF signal to a baseband processor 240. Also, the RF module 250 converts an IF signal inputted from the baseband processor 240 into an RF signal and transmits the RF signal through an antenna 255. As a BAA (Baseband Analog ASIC) that provides an interface between the control section 200 and the RF module 250, the baseband processor 240 converts a baseband digital signal applied from the control section 200 into an analog IF signal and applies the analog IF signal to the RF module 250. Also, the baseband processor 240 converts an analog IF signal applied from the RF module 250 into a baseband digital signal and applies the digital signal to the control section 200. The baseband processor 240 also plays a role to send a vCard to a recipient's mobile terminal and deliver a vCard received from a sender's mobile terminal to the control section 200.

A camera module 260 is mounted in the mobile terminal to implement a camera phone function. When the user selects a camera function using the key input section 220, the control section 200 detects the selection and controls the camera function of the mobile terminal. In the preferred embodiment of the present invention, a vCard image file can be a picture taken with the camera module 260.

An encoder 270 inserts vCard data, which is a vCard table in vCard MIME type, into image data in JPEG format. The encoder 270 comprises a JPEG encoding section, a vCard encoding section and an encoded data compound section.

The JPEG encoding section (not shown) of the encoder 270 encodes image data, which is the vCard itself as displayed on the mobile terminal, into a predetermined format and generates JPEG image data. The vCard encoding section (not shown) of the encoder 270 encodes a vCard table into a predetermined format, i.e., a MIME type, and generates vCard data. The encoded data compound section (not shown) of the encoder 270 combines every encoded data into one and generates JPEG data. The vCard table according to the present invention includes user information in the information fields, such as sender's name, phone number, email address, street address, company name, etc.

A decoder 280 separates vCard data from a received vCard, i.e., from JPEG data with the vCard MIME type inserted. The decoder 280 comprises a vCard data extracting section, a JPEG decoding section and a vCard decoding section.

The vCard data extracting section (not shown) of the decoder 280 separates JPEG image data and vCard data from JPEG data with the vCard MIME type inserted. The JPEG decoding section (not shown) of the decoder 280 decodes the JPEG image data and vCard data separated from the JPEG data. The vCard decoding section (not shown) of the decoder 280 decodes the extracted vCard data to interpret the content corresponding to the user information included in the vCard.

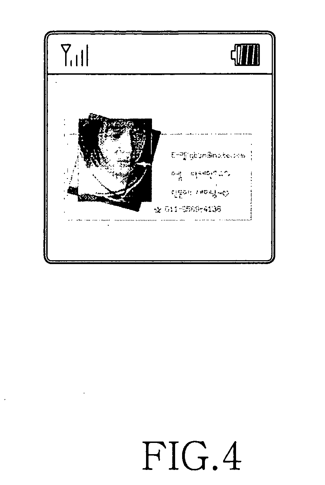

FIG. 4 shows a graphics intensive vCard displayed on a mobile terminal according to an embodiment of the present invention. Hereinafter, a method for exchanging graphics intensive vCards will be explained in detail.

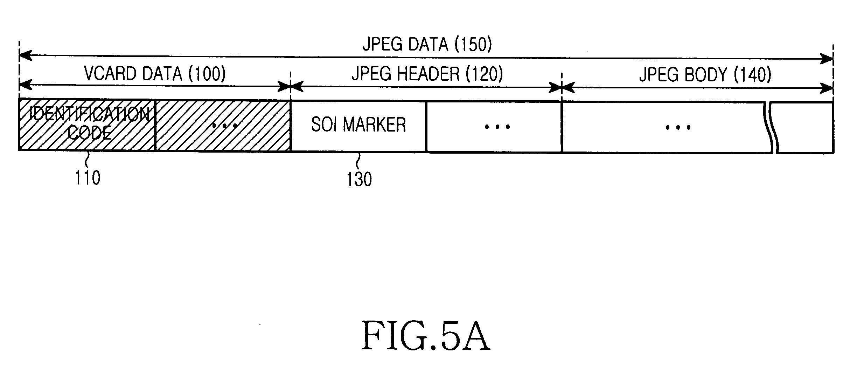

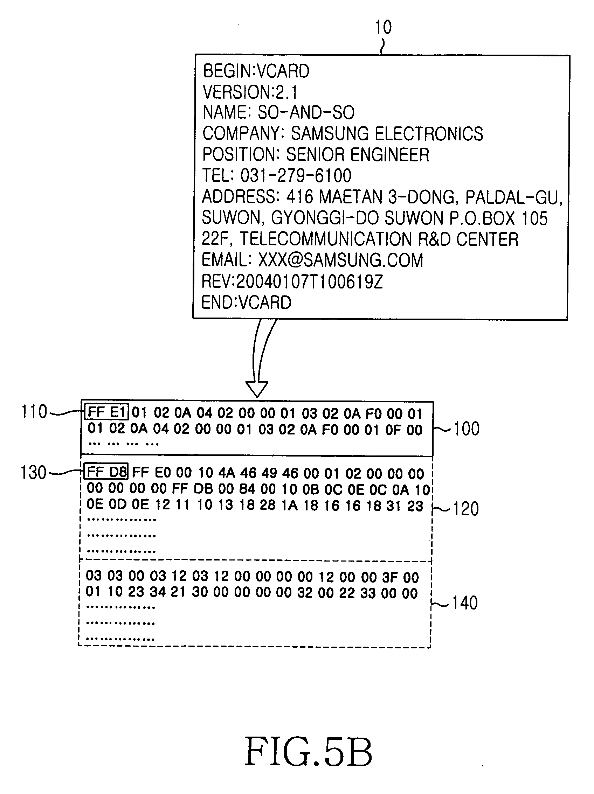

A method for sending a vCard designed to show a sender's individuality as shown in FIG. 4 will be explained with reference to FIGS. 5A and 5B. FIG. 5A shows the structure of a vCard file sent according to the present invention. FIG. 5B shows the vCard file in FIG. 5a converted into ASCII codes.

Referring to FIG. 5A, JPEG data in a vCard file to be sent to a recipient is generally composed of vCard data and image data in JPEG format. A vCard displayed on the mobile terminal is generated as one set of image data in JPEG format. A vCard file is combined JPEG data with vCard data in MIME type which is inserted into the JPEG image data. The vCard file is considered to be an image file.

Since vCard files are generated by appropriately combining all encoded data into a predetermined format, users can create vCards with image data showing their own individuality and exchange the vCards through mobile terminals, without any additional work for recognizing vCard files.

A process for combining encoded data in a predetermined format to insert vCard data into JPEG image data will be explained in detail. The JPEG image data is encoded and generated by the JPEG encoding section of the encoder 270. The encoded JPEG image data is composed of a JPEG header 120 labeling the data as image data and a JPEG body 140 corresponding to the actual image data.

The vCard encoding section of the encoder 270 encodes a vCard table corresponding to the user information into a vCard MIME type and generates vCard data in the MIME type formed, for example, using the user data as shown in FIG. 5B. The MIME type 122 in FIG. 5B is identical to the portion 22 excluding the image tag 20 in FIG. 2.

The encoded data compound section combines the JPEG image data generated by the JPEG encoding section with the vCard data generated by the vCard encoding section to form a single encoded JPEG data set. For the generation of the single JPEG data set, vCard data 100 in MIME type is inserted into the JPEG header 120 as shown in FIG. 5A. At this time, an SOI (Start Of Image) marker 130 is set at the beginning of the JPEG header 120 so that the combined data following the SOI marker can be recognized as JPEG image data. The vCard data inserted into the JPEG image data includes an identification code 110 at the beginning thereof as an indication "it is vCard data."

Referring to FIG. 5B, the vCard file in FIG. 5A is actually sent in ASCII codes. The ASCII codes corresponding to the vCard data 100 are inserted ahead of the ASCII codes corresponding to the JPEG header 120. Particularly, the identification code 110 containing an ASCII code "FF E1" at the beginning of the vCard data 100 is a comment marker which indicates that that the data following the identification code 110 should not be treated as JPEG image data. Due to the identification code 110 (which contains the ASCII code "FE E1," the vCard data is recognized as being separate and independent from the JPEG image so that it cannot influence the decoding of the JPEG image data.

The vCard data inserted into the JPEG header 120 is positioned ahead of the SOI marker 130 with an ASCII code "FF D8." An encoded data set generated during the inserting process can be treated as JPEG data. Thus, when a received vCard file is decoded to interpret the content, JPEG decoding is performed independently of the vCard data decoding, thereby enabling a recipient to store the vCard in a picture form as a single image file. Also, it is possible to separately decode the inserted vCard data, extract a vCard table corresponding to the user information from the vCard data and store the extracted vCard table, updating the vCard database.

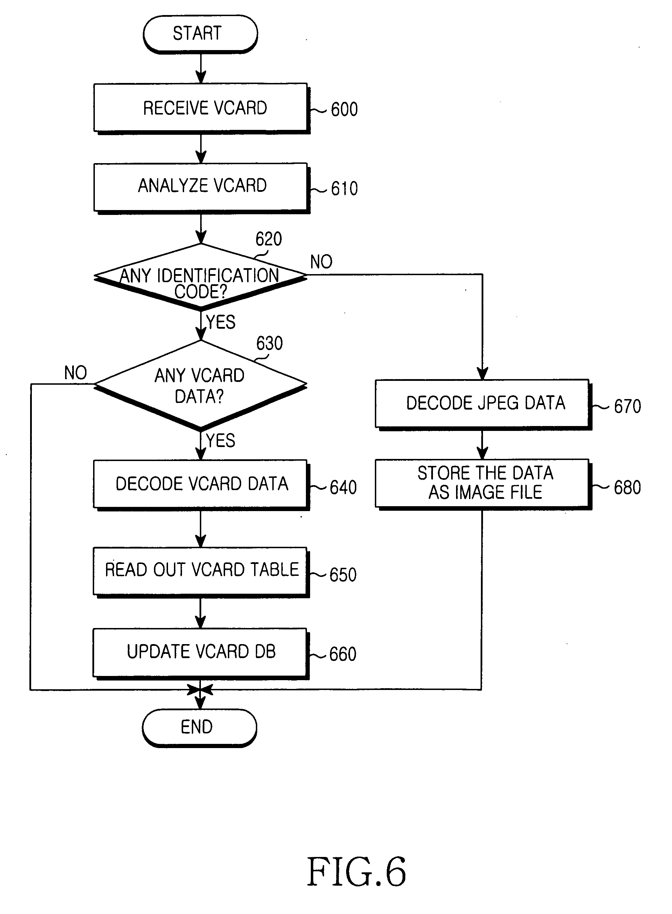

When a vCard created by the encoding process is sent, the recipient decodes the received vCard according to a predetermined format to interpret the content. The decoding process will be explained with reference to FIG. 6 which is a flow chart showing a process of managing a received vCard.

When a vCard file is received at step 600, the control section 200 proceeds with step 610 to analyze the received vCard file. The analysis is performed to determine whether vCard data is included in the vCard file which is deemed to be an image file. The control section 200 controls the decoder to perform a different decoding process for each data portion included in the received vCard file according to the data type. The control section 200 interprets the content of each decoded data portion and performs a required function based on the interpretation. All decoding processes are performed in the decoder 280 under the control of the control section 200.

The decoder 280 separates vCard data in vCard MIME type from JPEG data corresponding to the received vCard file. For this separation, the control section 200 proceeds with step 620 to search the whole vCard file for an identification code 110 indicating that vCard data 100 is included in a JPEG header 120.

When the identification code 110, indicating that vCard data is included in the JPEG header 120, is detected, the control section 200 controls the vCard data extracting section to divide the JPEG data into image data in JPEG format and vCard data in vCard MIME type and extract each data. At step 630, the control section 200 determines whether there is any vCard data to be extracted. If there is, the control section 200 will proceed with step 640 to decode the vCard data, independently of the image data in JPEG format.

At step 650, the control section 200 reads out a vCard table from the decoded vCard data. At step 660, the control section 200 stores the vCard table, updating the vCard database. In other words, the control section 200 reads out user information fields included in a single vCard table from the vCard data through the decoding process. Subsequently, the control section 200 stores the information fields, such as, sender's name, phone number, email address, street address and company name, in the vCard database of the memory 230, thereby updating the vCard database.

When no identification code is detected at step 620, the control section 200 controls the JPEG decoding section of the decoder 280 to decode the JPEG data. In case of a vCard file which does not include an identification code, the control section 200 can recognize that the vCard file does not include any vCard data. In other words, the control section 200 can determine whether any vCard data is included in a vCard file according to the presence of an identification code.

When no identification code is detected at step 620, the control section 200 proceeds with step 670. As described above, the control section 200 controls the JPEG decoding section to decode the JPEG data only. At step 680, the control section 200 stores the decoded JPEG image data in a single image file.

According to the present invention, one data set generated by encoding the JPEG image data including the vCard data is regarded as JPEG data. When receiving a vCard file of JPEG data, the control section 200 determines whether any vCard data is included in the received vCard file. Based on this determination, the control section 200 extracts image data in JPEG format and vCard data from the JPEG data.

More specifically, referring to FIG. 5A, the control section 200 searches the received vCard file to determine whether an identification code having an ASCII code "FF E1" is included in the vCard data inserted ahead of the JPEG header 120. When the identification code is detected, the control section 200 detects an ASCII code "BEGIN::VCARD" that indicates the beginning of the vCard data in vCard MIME type as shown in FIG. 2 to extract the actual vCard data that comes after the identification code.

If the ASCII code "BEGIN::VCARD" (as shown in FIG 2.) is detected, the control section 200 will recognize the data block after the ASCII code "BEGIN::VCARD" and before an ASCII code "END::VCARD" indicating the end of the data as the vCard data.

In accordance with the present invention, a vCard including user information, a background image and a photograph can be encoded into JPEG image data by the JPEG encoding section and sent to a recipient as an image file. When the user selects a function to send a vCard file, the control section 200 sends the vCard file to the recipient's mobile terminal using MMS (Multimedia Messaging Service). At this time, the user's (sender's) mobile terminal sends the file in JPEG format via MMS for the compatibility with the vCard database storing user information included in existing vCards and with the recipient's mobile terminal. In accordance with the present invention, the sender's mobile terminal can also send vCard data in vCard MIME content-type by including it in the JPEG image file.

When receiving a vCard file in JPEG format from the sender's mobile terminal, the recipient's mobile terminal can store the received file as an image file that can be set as a wallpaper or the like. When receiving a vCard file with vCard data included in a JPEG image file, the recipient's mobile terminal can read out a vCard table from the vCard data and store the table, updating the existing vCard database.

It is possible to overcome the limitation in data compatibility during vCard transmission by sending a vCard in a JPEG image file. Thus, users can insert various images, including a picture photographed using a camera provided in a mobile terminal and a background image, to create fashionable graphics-intensive vCards that suit their diverse tastes and individuality.

With the increasing penetration of mobile terminals, users can create and exchange vCards that satisfy the demand for distinctiveness using mobile terminals. A graphics intensive vCard itself as displayed on a recipient's mobile terminal can be stored as a single image file. Alternatively, it is possible to extract only the user information from the vCard and store the extracted information in the existing vCard list, i.e., a vCard database.

Also, the vCard can be stored in a JPEG file according to the present invention. Since the vCard can be sent to the recipient's mobile terminal in the same manner as that which is used to send a picture file, the compatibility of vCards exchanged between mobile terminals and other devices (for example, desktop and notebook PCs) is improved.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A method for managing vCards, comprising the steps of:
creating a vCard by inputting user information and an image on a sender's mobile terminal and storing the created vCard in a JPEG vCard file;
sending the JPEG vCard file to a desired recipient's mobile terminal from the sender's mobile terminal;
analyzing the JPEG vCard file received from the sender's mobile terminal in the recipient's mobile terminal; and
decoding and storing the JPEG vCard file in the recipient's mobile terminal according to the results of the analysis.

2. The method according to claim 1, wherein said step of creating a vCard by inputting user information and an image on a sender's mobile terminal and storing the created vCard in a JPEG vCard file includes:
forming a vCard table comprising a plurality of information fields in which the user information is inserted, and encoding the vCard table into Multi-purpose Internet Mail Extension, MIME, type to generate vCard data;
generating the vCard displayed on the mobile terminal as image data and encoding the image data into a predetermined format to generate image data in JPEG format; and
combining the vCard data and the JPEG image data to generate a single JPEG data set.

3. The method according to claim 1 or 2, wherein said step of decoding and storing the JPEG vCard file in the recipient's mobile terminal according to the results of the analysis includes:
searching for an identification code to determine whether any vCard data is included in the vCard file;
if an identification code is detected, extracting JPEG image data and vCard data from the JPEG vCard file; and
decoding the extracted JPEG image data and storing the same as an image file.

4. The method according to claim 3, further comprising the step of reading out a vCard table from the extracted vCard data and storing the vCard table for, updating a vCard database.
